# EUROPÄISCHE PATENTSCHRIFT

(11) **EP 0 582 924 B1**
(45) Veröffentlichungstag und Bekanntmachung des Hinweises auf die Patenterteilung: **04.06.1997**
(21) Anmeldenummer: 93112314.5
(22) Anmeldetag: 31.07.1993
(51) Int. Cl.: C07F 9/655

(54) **Verfahren zur Herstellung von Calcium-L-ascorbat-2-phosphat**
Process for the preparation of calcium-L-ascorbate-2-phosphate
Procédé de préparation du sel de calcium de l'acide L-ascorbique-2-phosphorylé

(30) Priorität: 12.08.1992 DE 4226625
(43) Veröffentlichungstag der Anmeldung: 16.02.1994
(73) Patentinhaber: BASF Aktiengesellschaft, 67063 Ludwigshafen (DE)
(72) Erfinder: Kaiser, Klaus, Dr., E-6730 Neustadt (DE); Balkenhohl, Friedhelm, Dr., D-6703 Limburgerhof (DE); Paust, Joachim, Dr., D-6708 Neuhofen (DE)

(56) Entgegenhaltungen:
- EP-A- 0 388 869
- WO-A-91/13895
- FR-A- 1 489 249
- US-A- 5 110 950

## Beschreibung

Die vorliegende Erfindung betrifft ein Verfahren zur Herstellung des Calciumsalzes von L-Ascorbinsäure-2-phosphat (auch Calcium-L-ascorbat-2-mono-phosphat genannt), einem Salz von L-Ascorbat-2-phosphat mit sehr guten anwendungstechnischen Eigenschaften.

L-Ascorbinsäure (Vitamin C) ist ein lebenswichtiger Teil einer ausgewogenen menschlichen Ernährung und es hat sich eine empfohlene diätetische Verabreichung dieses Vitamins eingebürgert. Jedoch ist das Vitamin C das am wenigsten stabile Vitamin in Nahrungsmitteln, da es äußerst stark mit dem Luftsauerstoff reagiert. Es ist bekannt, daß man die Ascorbinsäure gegenüber Sauerstoff und Hitze stabiler machen kann, indem man sie in geeignete Derivate überführt. Dies ist besonders wichtig für den neuerdings großen Einsatz von Vitamin C beim sogenannten Fischfarming, für das das schwerlösliche Calciumsalz besonders geeignet ist.

Ascorbinsäuremonophosphat (ASMP) hat gegenüber der freien Ascorbinsäure (AS) folgende wesentliche Vorteile:
1. relativ hohe Oxidationsstabilität,
2. allgemeine Bioverfügbarkeit, da es durch Phosphatasen in vivo und in vitro zu Ascorbinsaure spaltbar ist (dies wurde nachgewiesen, z.B. am Meerschweinchen, an Broilern, an Ferkeln, Rhesusaffen und Fischen),
3. hohe Hitzebeständigkeit, und dadurch die Möglichkeit zum Arbeiten in Extrudern, sowie
4. hohe Hydrolysebeständigkeit.

Nachteilig bei fast allen bekannten Verfahren zur Herstellung von Ascorbinsäuremonophosphat ist, daß sie nur für ein Arbeiten in kleinem Maßstab geeignet sind, da für eine technische Durchführung die beschriebene Aufarbeitung viel zu aufwendig ist. Das Problem ist, daß das Wertprodukt von einem großen Überschuß an aus dem Phosphorylierungsverfahren stammenden anorganischen Salzen abgetrennt werden muß. So erhält man beispielsweise nach dem Verfahren der US-A 4 179 445 bei der Phosphorylierung eine Reaktionslösung, die pro Äquivalent Wertprodukt etwa 4,5 Äquivalente KCl und 1,8 Äquivalente K₃PO₄, d.h. zusammen ca. 6,3:Äquivalente anorganische Salze enthält. Zur Aufarbeitung wird bei diesem Verfahren die gesamte Reaktionsmischung zur Entsalzung über eine Säule mit einem stark sauren Kationenaustauscher gegeben, das Säuleneluat mittels Mg(OH)₂ neutralisiert und das dabei erhaltene Magnesium-L-ascorbat-2-phosphat mit Ethanol gefällt.

Auch die Aufarbeitung des bei dem Verfahren gemäß US-A 4 724 262 erhaltenen Phosphorylierungsgemisches erfordert die Anwendung eines Ionenaustauschers (hier eines schwach basischen Anionenaustauschers), was für eine technische Durchführung zu aufwendig wäre.

Beim Verfahren gemäß EP-A 426 020 ist zur Isolierung von Ascorbat-2-phosphat eine Entsalzung durch einen stark sauren Kationenaustauscher in Kombination mit einer Aktivkohlenreinigung erforderlich. Das Wertprodukt wird hierbei letztlich als Magnesiumsalz mittels Methanolfällung erhalten.

Einen Fortschritt gegenüber dem beschriebenen Stand der Technik bedeuteten die Verfahren gemäß der DE-A 39 09 198 und der DE-A 40 00 977, denenzufolge zunächst das überschüssige Phosphat als KMgPO₄ und dann der Hauptteil des in der Lösung enthaltenen KCl mit Methanol ausgefällt wurden, ehe die Lösung mit einem Ionenaustauscher behandelt und/oder das L-Ascorbat-2-phosphat als gut kristallisierendes Kaliummagnesiumsalz ausgefällt wurde.

Gemäß dem Verfahren der DE-A 4 026 787 wird aus dem Phosphorylierungsgemisch die überschüssige Phosphorsäure durch Zusatz von 2 Mol MgCl₂ als KMgPO₄ entfernt, ein Teil des KCl durch Kristallisation entfernt und schließlich das restliche KCl mittels Elektrodialyse aus der Lösung des Kaliummagnesiumsalzes entfernt. Auch dieses Verfahren ist für eine technische Durchführung noch nicht ganz zufriedenstellend.

Für die Herstellung speziell des Ca-Salzes sind bisher zwei Verfahren bekannt. In dem Verfahren gemäß der US-A 4 179 445 (bzw. Carbohydrate Res. 67 (1978) 127) erfolgt die Herstellung des Calciumsalzes, ausgehend von dem entsprechenden kristallinen Tricyclohexylammoniumsalz, durch Entsalzung an einem stark sauren Ionenaustauscher und anschließende Zugabe von Ca(OH)₂. Nachteilig an diesem Verfahren ist die aufwendige Herstellung der Vorstufe durch den Einsatz eines zusätzlichen Ionenaustauschers, so daß letztlich für die Herstellung von Ca-ASMP zwei Entsalzungsschritte notwendig sind.

Vorteilhafter ist das Verfahren gemäß der WO-A 91/13895.

Hierbei erfolgt die Phosphorylierung von Ascorbinsäure mittels "präformiertem" Natriumdichlorophosphat in Gegenwart von Trimethylamin bei pH 12 (pH-Regulierung mit 28 %iger NaOH). Überschüssiges Phosphat fällt während der Reaktion als Na₃PO₄ aus und wird bei -8°C abfiltriert. Durch Zugabe des aufkonzentrierten Filtrats zu einer wäßrigen CaCl₂-Lösung fällt Ca-Ascorbinsäure-2-monophosphat kristallin an. Nachteilig an diesem Verfahren ist eine sehr aufwendige Reaktionsführung (komplizierte Temperatur- und pH-Wert-Kontrolle), eine schlechte Rückführbarkeit des Trimethylamins, die erforderliche Einhaltung einer Temperatur von -8°C bei der Abtrennung des anfallenden Na₃PO₄ sowie nicht für alle Anwendungszwecke ausreichende Reinheit des ausgefällten Calciumsalzes, die eine weitere Reinigung der Phosphate unter Zuhilfenahme bestimmter Kristallisationsbasen notwendig macht.

Es war daher die Aufgabe der Erfindung, die Aufarbeitung von wäßrig-alkalischen Reaktionsgemischen, wie man sie bei der Umsetzung von Ascorbinsäure mit überschüssigem POCl₃ in Gegenwart eines tertiären Amins und unter Aufrechterhalten eines pH-Wertes von 12 bis 13 während der Umsetzung erhält, unter Gewinnung von Calcium-L-ascorbat-2-phosphat so zu verbessern, daß sie auch in technischem Maßstab vorteilhaft durchgeführt werden kann.

Gegenstand der Erfindung ist ein Verfahren zur Gewinnung des Calciumsalzes von Ascorbinsäure-2-monophosphat der Formel I 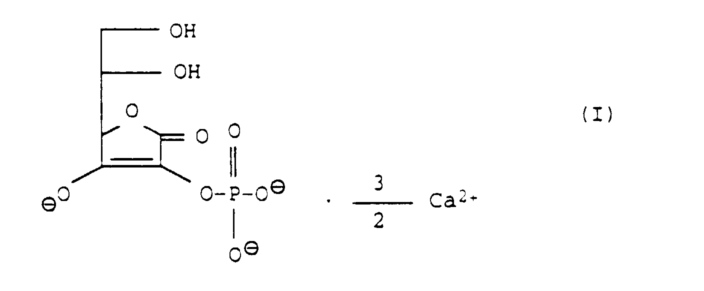 aus wäßrig-alkalischen Reaktionsgemischen, wie man sie bei der Umsetzung von Ascorbinsäure mit einem molaren Überschuß von Phosphoroxychlorid in Gegenwart eines tertiären Amins und unter Aufrechterhalten eines pH-Wertes von 12 bis 13 während der Reaktion mittels einer wäßrigen Alkalilauge erhält, das dadurch gekennzeichnet ist, daß man
a) von einem Reaktionsgemisch ausgeht, das durch Umsetzen von L-Ascorbinsäure mit Phosphoroxychlorid in Gegenwart von Pyridin unter Aufrechterhalten eines pH-Wertes von 12 bis 13 mittels einer wäßrigen Kalilauge erhalten wurde,
b) die bei dieser Umsetzung gebildeten Phorphorsäureionen mittels Magnesiumchlorid in Mengen von etwa 0,9 bis 1,1, vorzugsweise von etwa 1 Mol pro Mol Phosphorsäureionen als Kalium-Magnesiumphosphat ausfällt,
c) das Kalium-Magnesiumphosphat abtrennt,
d) aus der verbleibenden wäßrigen Lösung das Pyridin zusammen mit einem Teil des Wassers abdestilliert,
e) die erhaltene wäßrige Lösung mit Calciumchlorid versetzt und
f) das hierbei auskristallisierende Calciumsalz I isoliert
oder
daß man im Anschluß an den Verfahrensschritt (a) zunächst das Pyridin-Wasser-Gemisch gemäß Verfahrensschritt (d) abtrennt und danach die Verfahrensschritte (b), (c), (e) und (f) vornimmt.

Besonders vorteilhaft gestaltet sich das erfindungsgemäße Verfahren, wenn man im Reaktionsschritt a) die Ascorbinsäure mit etwa 2 Moläquivalenten Phosphoroxychlorid in Gegenwart von etwa 4,5 bis 5,5 Mol Pyridin umsetzt, und/oder im Reaktionsschritt b) die Phosphorsäureionen bei Temperaturen von 0 bis 30°C und einem pH-Wert von etwa 9,5 als Kalium-Magnesiumphosphat ausfällt, und/oder im Kristallisationsschritt e) die wäßrige Lösung mit etwa 1,5 bis 1,9 Mol Calciumchlorid in Form einer wäßrigen Lösung versetzt, und/oder im Kristallisationsschritt e) die wäßrige Lösung bei einem pH-Wert von 7 bis 10 mit einer wäßrigen Calciumchloridlösung versetzt.

Als Ausgangsverbindung verwendet man beim erfindungsgemäßen Verfahren L-Ascorbinsäure, d.h., daß auf die aufwendige Überführung in die 5,6-O-Isopropyliden-ascorbinsäure verzichtet werden kann.

Die Phosphorylierung erfolgt im wesentlichen gemäß den in der US-A 4 179 445 beschriebenen Bedingungen.

Besonders vorteilhaft gelingt die Phosphorylierung, wenn man die Ascorbinsäure in einer Anfangskonzentration von etwa 0,15 bis 0,6, vorzugsweise 0,2 bis 0,4 Mol pro Liter Reaktionsgemisch einsetzt. Das Pyridin verwendet man mit Vorteil in etwa der fünffach molaren Menge, bezogen auf die Ascorbinsäure.

Als Lösungsmittel verwendet man mit Vorteil Wasser. Das Phosphoroxychlorid verwendet man im allgemeinen in Mengen von etwa 1,5 bis 2,2, vorzugsweise 1,7 - 2,0 Mol pro Mol Ascorbinsäure.

Die Aufrechterhaltung eines pH-Wertes im Reaktionsgemisch während der Phosphorylierung ist wichtig für die Erzielung wirtschaftlich interessanter Ausbeuten. Die zur pH-Wert-Kontrolle verwendete wäßrige Kalilauge kann 20 bis 70, vorzugsweise 30 bis 60 gew.-%ig sein.

Nach Beendigung der POCl₃-Zugabe wird der pH-Wert zweckmäßigerweise auf pH 9 - 10 eingestellt, und die Temperatur wird auf Raumtemperatur (ca. 20°C) erhöht.

Zur Ausfällung der während der Phosphorylierung gebildeten Phosphorsäureionen verwendet man das Magnesiumchlorid mit Vorteil in Form einer wäßrigen Lösung.

Die Menge an MgCl₂ beträgt im allgemeinen etwa 0,9 - 1,1, vorzugsweise etwa 1 Mol pro Mol von im Reaktionsgemisch vorhandenem anorganischen Phosphat. Zur vollständigen Ausfällung des KMgPO₄ wird nach der Zugabe der MgCl₂-Lösung noch etwa 1 - 4, vorzugsweise 1,5 - 3 Stunden, nachgerührt. Der pH-Wert des Reaktionsgemisches sollte während dieser Fällung zweckmäßigerweise zwischen etwa 8 und 10, vorzugsweise bei etwa 9,5, liegen.

Die bei der Abtrennung von auskristallisiertem KMgPO₄ erhaltene Mutterlauge wird destillativ von dem enthaltenen Pyridin und einem Teil des Wassers befreit.

Zur Herstellung von Calcium-ascorbat-2-phosphat wird im allgemeinen die erhaltene Lösung langsam in eine wäßrige CaCl₂-Lösung getropft und das erhaltene Reaktionsgemisch bei einem pH-Wert von etwa 9 noch etwa 10 - 24 Stunden bei Raumtemperatur nachgerührt.

Eine besonders vorteilhafte Ausführungsform des erfindungsgemäßen Verfahrens besteht darin, im Anschluß an den Verfahrensschritt (a) das Pyridin-Wasser-Gemisch abzudestillieren und danach die restlichen Verfahrensschritte vorzunehmen, wobei es sich empfiehlt, den pH-Wert der Sumpfphase auf etwa 7,5 bis 11 einzustellen. Diese Verfahrensweise gestattet es, die Pyridin-Verluste auf ein Minimum zu senken.

Mit Hilfe des erfindungsgemäßen Verfahrens kann das für den Einsatz von Vitamin C beim sogenannten Fischfarming benötigte Calciumsalz von Ascorbinsäure-2-monophosphat auf technisch einfach zu realisierende Weise in guten Ausbeuten und ausreichender Reinheit hergestellt werden.

### Beispiel 1

### a) Phosphorylierung von Ascorbinsäure

In einem 2-l-Vierhalskolben, der mit einem Zweihalsaufsatz und einem Dreihalsaufsatz sowie einem Rührer, einem Thermometer, einer pH-Einstabmaßelektrode (KCl-Füllung), einer KOH-Dosierungsvorrichtung (pH-gesteuerter Prominent-Dulcometer), einer POCl₃-Dosierungsvorrichtung und einer Vorrichtung zum Begasen mit N2 versehen ist, wurden nach Begasen mit N₂ 670,0 ml Wasser und 79,1 g (1 mol) Pyridin vorgelegt. Die pH-gesteuerte KOH-Dosierungspumpe wurde mit einem Sollwert von 13 gestartet. Der Kolbeninhalt wurde auf 0°C abgekühlt und während des Abkühlens 35,2 g (0,2 mol) Ascorbinsäure eingetragen, wobei etwa 47 g einer 50 %igen wäßrigen Kalilauge zur Neutralisation verbraucht wurden. Anschließend wurden unter Aufrechterhaltung von 0°C durch Kühlen und eines pH-Wertes von 13 36 ml (0,394 mol) POCl₃ in einer Geschwindigkeit von 0,3 ml/min. zugefügt. Nach Beendigung der POCl₃-Zugabe wurde der pH-Sollwert auf 9,5 eingestellt und das Reaktionsgemisch auf 20°C erwärmt.

### b) Entfernen von überschüssiger Phosphorsäure

Zu der gemäß Stufe a) erhaltenen Lösung wurden innerhalb von 5 Minuten (min) und unter Aufrechterhalten eines pH-Wertes von 9,5 63,5 ml einer 30 %igen wäßrigen Magnesiumchloridlösung (0,2 mol) zugefügt und das Reaktionsgemisch noch 2 Stunden (h) bei pH 9,5 gerührt.

Anschließend wurde das ausgefallene KMgPO₄x4-6H₂O abgesaugt und 2 mal mit je 40 ml Wasser nachgewaschen. Die Mutterlauge wurde bei 60°C und 50 mbar auf 600 g eingeengt, wobei auch das Pyridin aus dem Gemisch abdestillierte. Sie enthielt gemäß HPLC-Analytik Trikalium-L-ascorbat-2-phosphat in einer Ausbeute von 72 - 75 % der Theorie.

### c) Ausfällen von Ascorbinsäure-2-monophosphat als Calciumsalz

Die gemäß Stufe b) erhaltene eingeengte Lösung wurde innerhalb von 60 min zu 180 ml einer 2molaren wäßrigen CaCl₂-Lösung getropft und das Reaktionsgemisch noch 22 Stunden (h) bei pH 9 und Raumtemperatur (RT) nachgerührt. Das gebildete Kristallisat wurde abgesaugt und 5 mal mit je 50 ml Wasser nachgewaschen, dann aufgelockert und 15 h im Stickstoffstrom sowie 24 h im Trockenschrank bei 80°C und 5 mbar getrocknet. Man erhielt 58 g des gewünschten Calcium-L-ascorbat-2-phosphat (enthaltend gemäß HPLC-Analytik 42 Gew.-% Ascorbinsäure), entsprechend einer Ausbeute von 69 % der Theorie, bezogen auf eingesetzte Ascorbinsäure.

Das gleiche Ergebnis wurde auf die Weise erzielt, daß das Pyridin-Wasser-Gemisch im Anschluß an Stufe (a) von dem auf pH 10 gestellten Reaktionsgemisch abdestilliert wurde. Das anschließend ausgefällte Kaliummagnesiumphosphat war praktisch frei von adsorbiertem Pyridin.

### Beispiel 2

a) In der in Beispiel 1 beschriebenen Apparatur wurden 530 ml Wasser und 79,1 g (1 mol) Pyridin vorgelegt. Der Kolbeninhalt wurde auf 0°C abgekühlt und während des Abkühlens unter Aufrechterhalten eines pH-Wertes von 13 35,2 g (0,2 mol) Ascorbinsäure eingetragen, wobei etwa 47 g einer 50 %igen wäßrigen KOH zur Neutralisation verbraucht wurden. Anschließend wurden unter Aufrechterhalten von 0°C durch Kühlen und eines pH-Wertes von 13 mittels 30 %iger wäßriger KOH 36,0 ml (0,394 mol) POCl₃ mit einer Geschwindigkeit von 0,3 ml/min zugefügt und das Reaktionsgemisch anschließend auf 20°C erwärmen lassen.
b) Zu der gemäß Stufe a) erhaltenen Lösung wurde innerhalb von 5 min und unter Aufrechterhalten eines pH-Wertes von 9,5 mittels 50 %iger KOH 63,5 ml einer 30 %igen wäßrigen MgCl₂-Lösung (0,2 mol) zugefügt, das Reaktionsgemisch noch 2 h bei pH 9,5 gerührt, dann das ausgefallene KMgPO₄x4-6H₂O abgesaugt, gewaschen und aus der Mutterlauge das Pyridin zusammen mit einem Teil des Wassers abdestilliert. Insgesamt wurden 47 g einer 50 %igen und etwa 350 g einer 30 %igen wäßrigen KOH verbraucht.
c) Die Aufarbeitung der gemäß Beispiel 2 b) erhaltenen eingeengten Lösung wurde analog Beispiel 1 c) aufgearbeitet. Man erhielt das Calcium-L-ascorbat-2-phosphat in einer Ausbeute von 69,2 % der Theorie.

## Patentansprüche

1. Verfahren zur Gewinnung des Calciumsalzes von Ascorbyl-2-monophosphat der Formel I 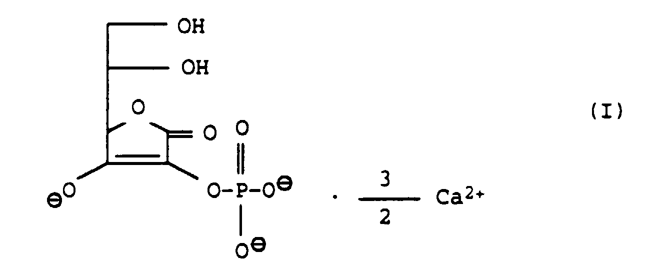 aus wäßrig-alkalischen Reaktionsgemischen, wie man sie bei der Umsetzung von Ascorbinsäure mit einem molaren Überschuß von Phosphoroxychlorid in Gegenwart eines tertiären Amins und unter Aufrechterhalten eines pH-Wertes von 12 bis 13 während der Reaktion mittels einer wäßrigen Alkalilauge erhält, dadurch gekennzeichnet, daß man
a) von einem Reaktionsgemisch ausgeht, das durch Umsetzen von Ascorbinsäure mit Phosphoroxychlorid in Gegenwart von Pyridin unter Aufrechterhalten eines pH-Wertes von 12 bis 13 mittels einer wäßrigen Kalilauge erhalten wurde,
b) die bei dieser Umsetzung gebildeten Phosphorsäureionen mittels Magnesiumchlorid in Mengen von etwa 0,9 bis 1,1 Mol pro Mol Phosphorsäureionen als Kalium-Magnesiumphosphat ausfällt,
c) das Kalium-Magnesiumphosphat abtrennt,
d) aus der verbleibenden wäßrigen Lösung das Pyridin zusammen mit einem Teil des Wassers abdestilliert,
e) die erhaltene wäßrige Lösung mit Calciumchlorid umsetzt
und
f) das hierbei auskristallisierende Calciumsalz I isoliert
oder
daß man im Anschluß an den Verfahrensschritt (a) zunächst das Pyridin-Wasser-Gemisch gemäß Verfahrensschritt (d) abtrennt und danach die Verfahrensschritte (b), (c), (e) und (f) vornimmt.

2. Verfahren gemäß Anspruch 1, dadurch gekennzeichnet, daß man im Reaktionsschritt a) die Ascorbinsäure mit etwa 2 Moläquivalenten Phosphoroxychlorid in Gegenwart von etwa 4,5 bis 5,5 Mol Pyridin umsetzt.

3. Verfahren gemäß Anspruch 1, dadurch gekennzeichnet, daß man im Reaktionsschritt b) die Phosphorsäureionen bei Temperaturen von 0 bis 30°C und einem pH-Wert von etwa 9,5 als Kalium-Magnesiumphosphat ausfällt.

4. Verfahren gemäß Anspruch 1, dadurch gekennzeichnet, daß man im Kristallisationsschritt e) die wäßrige Lösung mit etwa 1,5 bis 1,9 Mol Calciumchlorid in Form einer wäßrigen Lösung umsetzt.

5. Verfahren gemäß Anspruch 1, dadurch gekennzeichnet, daß man im Kristallisationsschritt e) die wäßrige Lösung bei einem pH-Wert von 7 bis 10 mit einer wäßrigen Calciumchloridlösung versetzt.

## Revendications

1. Procédé pour isoler le sel de calcium l'ascorbyl-2-monophosphate de formule I 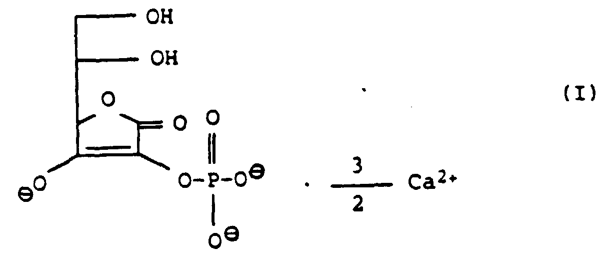 de mélanges de réaction aqueux alcalins tels qu'obtenus en faisant réagir l'acide ascorbique avec un excès molaire d'oxychlorure de phosphore en présence d'une amine tertiaire et en maintenant un pH de 12 à 13 à l'aide d'une lessive alcaline en cours de réaction,
caractérisé par le fait que
a) on part d'un mélange de réaction obtenu en faisant réagir l'acide ascorbique avec l'oxychlorure de phosphore en présence de pyridine et en maintenant un pH de 12 à 13 à l'aide d'une lessive de potasse,
b) on précite les ions acide phosphorique formés dans cette réaction à l'état de phosphate de potassium et de magnésium par le chlorure de magnésium en quantité d'environ 0,9 à 1,1, mol par mol des ions acide phosphorique.
c) on sépare le phosphate de potassium et de magnésium,
d) à partir de la solution aqueuse résiduelle, on distille la pyridine avec une partie de l'eau,
e) on fait réagir la solution aqueuse obtenue avec le chlorure de calcium et
f) on isole le sel de calcium I qui cristallise,
ou bien
à la suite du stade opératoire (a), on sépare d'abord le mélange pyridine-eau comme au stade opératoire (d) puis on exécute les stades opératoires (b), (c), (e) et (f).

2. Procédé selon revendication 1, caractérisé par le fait que, au stade de réaction (a), on fait réagir l'acide ascorbique avec environ deux équivalents molaires d'oxychlorure de phosphore en présence d'environ 4,5 à 5,5 mol de pyridine.

3. Procédé selon revendication 1, caractérisé par le fait que, au stade de réaction (b), on précipite les ions acide phosphorique à l'état de phosphate de potassium et de magnésium à des températures de 0 à 30° C et un pH d'environ 9,5.

4. Procédé selon revendication 1, caractérisé par le fait que, au stade cristallisation (e), on fait réagir la solution aqueuse avec 1,5 à 1,9 mol environ de chlorure de calcium à l'état de solution aqueuse.

5. Procédé selon revendication 1, caractérisé par le fait que, au stade cristallisation (e), on ajoute à la solution aqueuse, à un pH de 7 à 10, une solution aqueuse de chlorure de calcium.

## Claims

1. A process for isolating the calcium salt of ascorbyl 2-monophosphate of the formula I 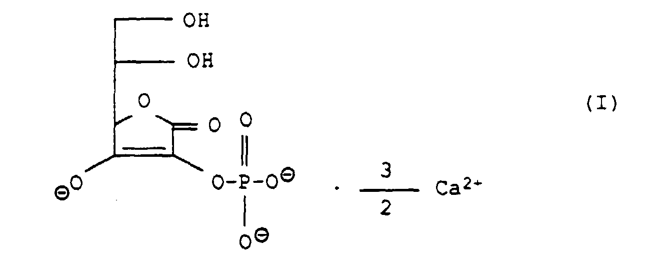 from aqueous alkaline reaction mixtures as are obtained on reaction of ascorbic acid with a molar excess of phosphorus oxychloride in the presence of a tertiary amine while maintaining a pH of from 12 to 13 during the reaction by means of an aqueous alkali metal hydroxide solution, which comprises
a) starting from a reaction mixture which has been obtained by reacting ascorbic acid with phosphorus oxychloride in the presence of pyridine while maintaining a pH of from 12 to 13 by means of an aqueous potassium hydroxide solution,
b) precipitating, as potassium magnesium phosphate, the phosphate ions which have been formed in this reaction by means of magnesium chloride in amounts of about 0.9-1.1 mol per mol of phosphate ions,
c) removing the potassium magnesium phosphate,
d) distilling the remaining aqueous solution to remove the pyridine together with part of the water,
e) reacting the resulting aqueous solution with calcium chloride and
f) isolating the calcium salt I which crystallizes thereby, or
following step (a), first removing the pyridine-water mixture according to step (d), and thereafter carrying out steps (b), (c), (e) and (f).

2. A process as claimed in claim 1, wherein in step a) the ascorbic acid is reacted with about 2 mole equivalents of phosphorus oxychloride in the presence of about 4.5-5.5 mol of pyridine.

3. A process as claimed in claim 1, wherein in step b) the phosphate ions are precipitated as potassium magnesium phosphate at from 0 to 30°C and at a pH of about 9.5.

4. A process as claimed in claim 1, wherein in step e) the aqueous solution is reacted with about 1.5-1.9 mol of calcium chloride in the form of an aqueous solution.

5. A process as claimed in claim 1, wherein in step e) an aqueous calcium chloride solution is added to the aqueous solution at a pH of from 7 to 10.
